(19) Europäisches Patentamt
European Patent Office
Office européen des brevets

(11) **EP 3 553 415 A1**

(12) **DEMANDE DE BREVET EUROPEEN**

(43) Date de publication:
**16.10.2019 Bulletin 2019/42**

(51) Int Cl.:
***F24S 20/64*** *(2018.01)*

(21) Numéro de dépôt: **19169020.5**

(22) Date de dépôt: **12.04.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **12.04.2018 FR 1853225**

(71) Demandeur: **Commissariat à l'Energie Atomique et aux Energies Alternatives 75015 Paris (FR)**

(72) Inventeurs:
• **ASSOA, Ya Brigitte**
**38054 GRENOBLE CEDEX 09 (FR)**
• **MESSAOUDI, Paul**
**38054 GRENOBLE CEDEX 09 (FR)**
• **LEVRARD, Daniel**
**38054 GRENOBLE CEDEX 09 (FR)**

(74) Mandataire: **Bronchart, Quentin**
**Cabinet Hautier**
**20, rue de la Liberté**
**06000 Nice (FR)**

(54) **SYSTÈME DE RÉGULATION THERMIQUE**

(57)     L'invention concerne le domaine de l'intégration de capteurs solaires thermiques à une route.

Elle propose un système de régulation thermique 1 destiné à être agencé conjointement avec un revêtement routier 3. Le système comprend un dispositif de captation 10 d'énergie thermique, un dispositif de restitution 12 de l'énergie captée, et un dispositif de transmission 11 d'énergie relié au dispositif de captation et au dispositif de restitution pour transmettre l'énergie captée au dispositif de restitution. Le dispositif de captation est au moins en partie agencé sous le revêtement routier de sorte à être en conduction thermique avec le revêtement routier. Au moins deux fonctions parmi la captation, la transmission et la restitution sont chacune assurées par un empilement composite multicouches 2 comprenant une couche conductrice thermique anisotrope 20 et une couche thermiquement isolante 21. Lesdites au moins deux fonctions sont ainsi réalisées par conduction thermique.

FIG. 7

EP 3 553 415 A1

**Description**

DOMAINE TECHNIQUE DE L'INVENTION

L'invention concerne le domaine de l'intégration de capteurs solaires thermiques à une route afin de la rendre productrice d'énergie, notamment thermique.

ÉTAT DE LA TECHNIQUE

La récupération de chaleur par gains solaires au niveau d'une route peut demander la mise en place de capteurs solaires thermiques à air ou à eau sous le revêtement routier, par exemple un revêtement bitumineux. On citera, pour l'exemple, le dispositif de régulation thermique décrit dans la demande de brevet référencée CN 1884694 A. Les capteurs solaires thermiques à fluide caloporteur contribuent à l'extraction de la chaleur emmagasinée dans la route par circulation mécanique du fluide caloporteur, pour diverses applications telles que le chauffage de bâtiments proches ou la fourniture d'eau chaude sanitaire. Le fonctionnement de ce type de capteurs solaires thermiques est en outre réversible afin de contribuer à déneiger ou déverglacer la route, et notamment les pistes d'atterrissage, qu'ils intègrent.

De tels dispositifs de régulation thermique sont dits actifs, car ils mettent en oeuvre la circulation d'un fluide. Leur intégration nécessite de construire ou refaire une route spécifique. Leur installation nécessite une expertise que les constructeurs de route ne possèdent pas. En particulier, l'intervention et la mobilisation de plombiers spécialisés peut engendrer un coût important. Par ailleurs, l'utilisation d'une circulation de fluide caloporteur dans des serpentins de grande longueur pose des problèmes notamment de durabilité et de maintenance. En effet, la détection et la réparation d'une éventuelle fuite est une contrainte technique très forte.

Des solutions dites passives (i.e. sans circulation forcée de fluide) d'intégration de capteurs solaires thermiques à la route existent également. On citera, pour l'exemple, la demande de brevet référencée CN 106948234 A, qui propose un revêtement routier composite comprenant une sous-couche conductrice thermique incorporant un matériau à changement de phase solide-liquide pour réguler la température du revêtement routier. Cependant, un tel revêtement routier composite ne permet pas de rendre la route productrice d'énergie, notamment thermique.

Par ailleurs, il est connu, de la demande de brevet référencée CN 103633882 A, un système thermoélectrique pour route asphaltée urbaine, constitué de trois dispositifs pavés sur un fond de route. Les trois dispositifs comprennent un dispositif de collecte de chaleur solaire, un dispositif de génération d'énergie et un dispositif de stockage d'énergie électrique. Le dispositif de collecte de chaleur solaire est utilisé comme source de chaleur de l'ensemble du système et est constitué principalement d'une couche d'asphalte dopée avec des matériaux conducteurs thermiques tels que du graphite et une feuille d'aluminium. Le dispositif de génération d'énergie est formé par plusieurs modules de feuilles thermoélectriques à semi-conducteurs et de la graisse de silice, pour convertir la chaleur collectée en énergie électrique. Le système de stockage d'énergie électrique comprend un convertisseur DC/DC, un inverseur et une batterie de stockage. Grâce à ce système thermoélectrique, les dommages causés à la chaussée par les gradients de température qu'elle subit sont réduits, le comportement et la durabilité de la route sont améliorés et l'effet d'îlot de chaleur urbain est allégé. Cependant, un tel système thermoélectrique nécessite une forte isolation thermique pour éviter les pertes par conduction thermique hors du système et présente un faible rendement de conversion thermoélectrique. Ce dernier est effectivement proportionnel au gradient thermique entre la source chaude et la source froide du système thermoélectrique ; or ce dernier est nécessairement faible pour éviter la dégradation de la source chaude que constitue la route et dans la mesure où la température de la source froide n'est pas maîtrisée, mais subie. En outre, un tel système thermoélectrique ne permet pas de rendre la chaussée productrice d'énergie thermique.

Il est encore connu, du modèle d'utilité CN 203960710 U, un revêtement de trottoir comprenant : une couche d'amortissement, une couche de base, une couche intermédiaire et une couche supérieure disposées successivement de bas en haut. La couche intermédiaire comprend une couche d'isolation thermique, une couche de transfert de chaleur dans son épaisseur, un panneau de cellules photovoltaïques et un câble chauffant. La couche d'isolation thermique est située dans une partie inférieure de la couche intermédiaire au contact de la couche de base. La couche supérieure comprend une couche de génération de chaleur et une couche transparente. La couche transparente est constituée d'un matériau à haute résistance, haute transparence, antidérapant et anti-usure. La couche chauffante est faite de béton qui présente une bonne conductivité thermique, un rayonnement thermique uniforme et une intensité d'impact élevée. Le panneau de cellules photovoltaïques est utilisé pour convertir l'énergie optique en énergie électrique. Une combinaison du panneau de cellules photovoltaïques avec une structure de chaussée conventionnelle est applicable à la fonte de la glace et de la neige et peut également alimenter les installations électriques équipant la route. Cependant, les fonctions thermiques et photovoltaïques qu'il offre sont simplement cumulées. En outre, un tel revêtement ne permet pas de rendre la chaussée productrice d'énergie thermique à destination d'autres équipements.

Un objet de la présente invention est donc de proposer un système de régulation thermique offrant un meilleur niveau d'intégration à la route, en limitant, voire en supprimant, les inconvénients mentionnés ci-dessus que présentent les solutions de l'état de la technique.

## RÉSUMÉ DE L'INVENTION

Pour atteindre cet objectif, la présente invention prévoit un système de régulation thermique destiné à être agencé conjointement avec un revêtement routier pour en réguler la température. Le système comprend un dispositif de captation d'énergie thermique, un dispositif de restitution d'au moins une partie de l'énergie captée, et un dispositif de transmission d'énergie relié d'une part au dispositif de captation, d'autre part au dispositif de restitution pour transmettre au moins une partie de l'énergie captée au dispositif de restitution, ou inversement.

Au moins le dispositif de captation est destiné à être au moins en partie agencé sous le revêtement routier et est configuré pour être en conduction thermique avec le revêtement routier.

Selon un mode de réalisation, le système est tel qu'au moins deux dispositifs parmi le dispositif de captation, le dispositif de transmission et le dispositif de restitution comprennent un empilement composite multicouches. Chaque empilement composite multicouches comprend au moins une couche conductrice thermique anisotrope et au moins une couche thermiquement isolante. De la sorte, au moins deux fonctions correspondantes parmi la captation, la transmission et la restitution de l'énergie sont réalisées par conduction thermique. Plus particulièrement, au moins deux dispositifs, de préférence les trois dispositifs, parmi le dispositif de captation, le dispositif de transmission et le dispositif de restitution sont exempts de tuyaux de circulation d'un fluide caloporteur. De préférence, la couche conductrice thermique anisotrope est directement au contact de l'au moins une couche thermiquement isolante.

Selon un autre mode de réalisation, le système est tel que le dispositif de restitution comprend un empilement composite multicouches et qu'au moins l'un parmi le dispositif de captation et le dispositif de transmission comprend un empilement composite multicouches différent de l'empilement composite multicouches que comprend le dispositif de restitution. Chaque empilement composite multicouches comprend au moins une couche conductrice thermique anisotrope et au moins une couche thermiquement isolante. En outre, au moins le dispositif de captation et le dispositif de transmission sont exempts de tuyaux de circulation d'un fluide caloporteur. De la sorte, au moins deux fonctions correspondantes parmi la captation, la transmission et la restitution de l'énergie sont réalisées par conduction thermique. De préférence, le dispositif de captation, le dispositif de transmission et le dispositif de restitution sont exempts de tuyaux de circulation d'un fluide caloporteur. De préférence, la couche conductrice thermique anisotrope est directement au contact de l'au moins une couche thermiquement isolante. Par ailleurs, le dispositif de restitution est de préférence destiné à être au moins en partie déporté par rapport au revêtement routier ; il ne comprend au plus qu'une partie destinée à être agencée sous le revêtement routier. En outre, le dispositif de restitution est de préférence configuré pour ne pas être directement en conduction thermique avec le revêtement routier.

Selon une particularité, au moins le dispositif de captation et le dispositif de restitution ne sont pas superposés entre eux. De préférence, aucun des trois dispositifs n'est superposé, notamment entièrement, à l'un quelconque des deux autres dispositifs.

La configuration d'intégration proposée est une solution passive permettant la gestion (l'extraction mais aussi l'acheminement) par conduction de la chaleur emmagasinée par le revêtement routier, la chaleur emmagasinée étant essentiellement due au gain solaire.

Le système, totalement intégré, permet de multi-fonctionnaliser la route, tout en augmentant de façon synergique la durabilité du revêtement routier à travers la réduction des gradients de température auxquels il est soumis quotidiennement et de façon saisonnière.

Le système permet de découpler entre elles les problématiques de captation, de transmission et de restitution d'énergie thermique. Notamment, le système permet de déporter la zone de restitution de l'énergie captée par rapport à la zone de captation de l'énergie thermique, et donc par rapport à la route.

Comme cela apparaîtra clairement ci-dessous, l'empilement composite multicouches selon l'invention peut en fait être avantageusement composé de matériaux de construction conventionnels qui assurent à la fois au moins certaines des fonctions du revêtement routier 3, voire du soubassement du revêtement routier 3, et les fonctions thermiques du système 1.

L'installation du système 1 selon l'invention sur routes en construction ou en réfection est relativement simple par rapport aux systèmes, notamment dits actifs, existants ; en particulier, elle ne nécessite pas une main d'oeuvre spécialisée dans d'autres domaines techniques que ceux directement et traditionnellement liés à la construction ou à la réfection de routes.

Contrairement aux systèmes actifs existants, le système tel que proposé ci-dessus ne nécessite pas de prendre en compte des contraintes d'étanchéité pour diminuer le risque de fissures des canalisations dans lesquelles circule un fluide caloporteur. Également, le système proposé est peu onéreux à la fabrication, à l'installation et à l'entretien. Ensuite, si l'offre pour des systèmes actifs existants est réduite sur le marché à l'heure actuelle, il est espéré, grâce au système de l'invention, une augmentation significative de l'offre dans les années à venir. En outre, contrairement aux systèmes actifs existants, la surface de captation de l'énergie solaire n'est pas limitée, notamment du fait de sa grande flexibilité d'intégration et de son coût réduit. L'intégration du système selon l'invention n'induit pas nécessairement une modification de la composition de base du revêtement routier.

Le système de régulation selon l'invention permet de rendre la chaussée productrice d'énergie thermique à destination d'autres équipements, tels que tous types d'équipements de route électroniques, par exemple des panneaux d'affichage ou d'éclairage à LED, un récupérateur à air, tel qu'un radiateur ou une pompe à chaleur, un récupérateur à eau, tel que des canalisations ou un réservoir d'eau, un récupérateur par le sol, tel qu'un puits canadien ou une centrale géothermique.

Pour une efficacité d'absorption (zone de captation) et une efficacité de conduction thermique (zone de transmission) maximales, l'invention peut remplacer les couches superficielles à base d'enrobé bitume (couches de surfaces et couche de base bitumineuse) des routes conventionnelles, tout en assurant les fonctions de ces couches superficielles.

De manière facultative, le dispositif de captation est configuré pour constituer au moins en partie un soubassement du revêtement routier et le dispositif de restitution est agencé de façon déportée, par exemple d'une distance comprise entre 1 cm et 10 m, de préférence comprise entre 10 cm et 2 m, par rapport à un bord latéral du revêtement routier.

## BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La figure 1 illustre une vue schématique en coupe dans l'épaisseur d'un système de régulation thermique selon un mode de réalisation de l'invention, et plus particulièrement le gradient d'absorptivité du dispositif de captation et le gradient de conductivité du dispositif de transmission ;

La figure 2 illustre une vue schématique en coupe dans l'épaisseur du système de régulation thermique de la figure 1 et y ajoute une illustration de la transmission de chaleur opérée par le dispositif de transmission ;

La figure 3 illustre une vue schématique en coupe dans l'épaisseur d'un système de régulation thermique selon un autre mode de réalisation que celui illustré par les figures 1 et 2 ;

La figure 4 illustre une vue schématique en coupe dans l'épaisseur d'un dispositif de captation ou d'un dispositif de transmission du système de régulation selon un mode de réalisation de l'invention ;

La figure 5 illustre une vue schématique en coupe dans l'épaisseur d'un dispositif de transmission du système de régulation selon un mode de réalisation de l'invention ;

La figure 6 illustre une vue schématique en coupe dans l'épaisseur d'un dispositif de restitution du système de régulation selon un mode de réalisation de l'invention ;

La figure 7 illustre une vue schématique en perspective coupée d'un système de régulation thermique selon un mode de réalisation de l'invention, le système étant intégré à une route.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les épaisseurs relatives des différentes couches ne sont pas représentatives de la réalité.

## DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :

- la couche conductrice thermique anisotrope s'étend principalement dans un plan et est configurée pour présenter, dans au moins une direction comprise dans ledit plan, une conductivité thermique supérieure, de préférence d'au moins deux ordres de grandeur, voire d'au moins quatre ordres de grandeur, à sa conductivité thermique dans une direction perpendiculaire audit plan ;
- la conductivité thermique de la couche conductrice thermique anisotrope, dans au moins une de ses deux directions d'extension principales, est supérieure à 100 $W \cdot m^{-1} \cdot K^{-1}$, de préférence comprise entre 400 $W \cdot m^{-1} \cdot K^{-1}$ et 6000 $W \cdot m^{-1} \cdot K^{-1}$;
- la conductivité thermique de la couche conductrice thermique anisotrope, dans une direction perpendiculaire à ses deux directions d'extension principales, est inférieure à 0,1 $W \cdot m^{-1} \cdot K^{-1}$, de préférence inférieure à 0,04 $W \cdot m^{-1} \cdot K^{-1}$;
- l'empilement composite multicouches comprend au moins deux, voire au moins trois, couches, dont au moins la couche conductrice thermique anisotrope et la couche thermiquement isolante, configurées entre elles, de préférence en contact direct, pour générer au moins l'un parmi : un gradient d'absorptivité thermique et un gradient de conductivité thermique dans l'épaisseur de l'empilement. La couche conductrice thermique anisotrope présente une absorptivité thermique et une conductivité thermique respectivement supérieures à celles de la couche thermiquement isolante. L'absorptivité thermique et la conductivité thermique varient dans l'épaisseur de l'empilement composite multicouches de façon monotone ou de façon infléchie. Dans cette dernière configuration, l'empilement composite multicouches peut présenter une configuration multicouches sensiblement symétrique dans son épaisseur ;
- au moins le dispositif de captation comprend ledit empilement composite multicouches, et l'empilement composite multicouches présente une absorptivité thermique variant d'une valeur comprise entre 0,3 et 1 pour au moins une couche de l'empilement orientée vers une source de chaleur extérieure au système à une valeur inférieure à 0,3 pour au moins une couche de l'empilement orientée à l'opposé de la source de chaleur ;

- au moins le dispositif de transmission comprend ledit empilement composite multicouches, et l'empilement composite multicouches présente, au moins sur une première portion s'étendant depuis le dispositif de captation, une absorptivité thermique variant d'une valeur comprise entre 0,3 et 1 pour au moins une couche de l'empilement orientée vers une source de chaleur extérieure au système à une valeur inférieure à 0,3 pour au moins une couche de l'empilement orientée à l'opposé de la source de chaleur ;

- en alternative ou en complément à la caractéristique précédente, au moins le dispositif de transmission comprend ledit empilement composite multicouches, et l'empilement composite multicouches présente, au moins sur une deuxième portion s'étendant depuis le dispositif de restitution, une absorptivité thermique variant d'une valeur comprise entre 0,3 et 1 pour au moins une couche intermédiaire de l'empilement à une valeur inférieure à 0,3 pour au moins une des couches de l'empilement situées de part et d'autre de la couche intermédiaire. La deuxième portion s'étend sur une longueur de préférence inférieure à 10 m ;

- au moins le dispositif de captation comprend ledit empilement composite multicouches, et chaque couche conductrice thermique anisotrope de l'empilement composite multicouches est agencée dans l'empilement de sorte à être orientée vers une source de chaleur extérieure au système, chaque couche thermiquement isolante de l'empilement composite multicouches du dispositif de captation recouvrant la couche conductrice thermique anisotrope sur un côté opposé à la source de chaleur ;

- chaque couche conductrice thermique anisotrope de l'empilement composite multicouches du dispositif de restitution est configurée dans l'empilement pour être en conduction thermique avec un récupérateur de chaleur extérieur au système auquel l'énergie captée et transmise est à restituer, chaque couche thermiquement isolante de l'empilement composite multicouches du dispositif de restitution recouvrant la couche conductrice thermique anisotrope sur un côté opposé au récupérateur de chaleur ;

- au moins le dispositif de transmission comprend ledit empilement composite multicouches, et chaque couche conductrice thermique anisotrope de l'empilement composite multicouches est agencée dans l'empilement de sorte à être orientée vers une source de chaleur extérieure au système, chaque couche thermiquement isolante de l'empilement composite multicouches du dispositif de transmission recouvrant la couche conductrice thermique anisotrope sur un côté opposé à la source de chaleur ;

- l'empilement composite multicouches du dispositif de transmission comprend des couches, dont au moins la couche conductrice thermique anisotrope et la couche thermiquement isolante, configurées entre elles, de préférence en contact direct, pour générer au moins un gradient de conductivité thermique dans l'épaisseur de l'empilement ;

- au moins le dispositif de transmission comprend ledit empilement composite multicouches, et l'empilement composite multicouches présente successivement, sur au moins une deuxième portion s'étendant depuis le dispositif de restitution, au moins une première couche thermiquement isolante, au moins une couche conductrice thermique anisotrope et au moins une deuxième couche thermiquement isolante. Ladite deuxième portion s'étend sur une longueur de préférence inférieure à 10 m ;

- le dispositif de transmission se présente sous la forme d'une pluralité de bandes dudit empilement composite multicouches, chaque bande étant reliée par une de ses extrémités au dispositif de captation et par l'autre de ses extrémités au dispositif de restitution ;

- au moins le dispositif de captation comprend ledit empilement composite multicouches et au moins un empilement composite multicouches comprend une sous-couche de lissage que recouvrent au moins en partie la couche conductrice thermique anisotrope et la couche thermiquement isolante dudit empilement composite multicouches. La sous-couche de lissage comprend de préférence l'un au moins parmi : un asphalte et un polymère tel que le polystyrène ou le polyuréthane. La sous-couche de lissage est d'une épaisseur au moins localement variable de sorte à offrir une surface supérieure plane malgré les irrégularités sous-jacentes ;

- le dispositif de transmission peut être relié à au moins l'un parmi le dispositif de captation et le dispositif de restitution par des interrupteurs de flux thermiques configurés pour interrompre et rétablir successivement les flux thermiques entre le dispositif de transmission et au moins l'un parmi le dispositif de captation et le dispositif de restitution, respectivement ;

- le dispositif de transmission peut s'étendre de sorte à être relié à une zone thermique additionnelle à laquelle un excès d'énergie captée par le dispositif de captation peut être restitué ou depuis laquelle une énergie thermique peut être captée pour compenser un déficit d'énergie captée par le dispositif de captation ;

- la couche conductrice thermique anisotrope comprend l'un au moins parmi :

  ○ une feuille ou une grille conductrice thermique constituée en un matériau choisi parmi l'aluminium, le cuivre, l'acier et le graphite,
  ○ un mélange composite de fibres de carbone et de membrane goudronnée, par exemple une membrane active bitume, et

○ au moins une pluralité de fibres. Certaines au moins desdites fibres sont des fibres conductrices thermiquement et/ou électriquement, constituées de préférence en un matériau choisi parmi le carbone et le verre. Au moins l'une, parmi la feuille conductrice thermique et la pluralité de fibres, est le cas échéant au moins partiellement noyée dans un enduit tel qu'un polymère. Au moins certaines desdites fibres conductrices sont configurées pour définir un chemin de conduction thermique s'inscrivant sensiblement dans le plan de la couche conductrice thermique anisotrope. Par exemple, parmi lesdites fibres conductrices, au moins l'une forme un fil métallique ; de préférence, plusieurs fibres thermiquement conductrices forment chacune un fil métallique. Au moins une fibre conductrice peut présenter une épaisseur comprise entre 0,05 et 1 mm, de préférence entre 0,1 et 0,5 mm, et encore plus préférentiellement sensiblement égale à 0,3 mm. Ladite pluralité de fibres peut constituer un tissu, de préférence sergé. La pluralité de fibres conductrices peut constituer entre 30 et 70 %, de préférence sensiblement 50 %, de la densité surfacique de la couche conductrice thermique anisotrope ;

- la couche thermiquement isolante peut comprendre l'un au moins parmi : un asphalte et un matériau à base d'un mélange de gravillons et de liant hydraulique routier (LHR), tel que du bitume. Le liant hydraulique routier peut être coulé ou déposé lors de l'installation du système. Les gravillons constituant en partie la couche thermiquement isolante sont de préférence des gravillons de pierre non réfractaire et isolante thermique, par exemple une pierre pauvre en silice. La couche thermiquement isolante peut comprendre en outre des charges isolantes telles que des fibres végétales et/ou minérales ;
- le système de régulation comprend en outre le revêtement routier, et le revêtement routier comprend un enrobé prenant par exemple la composition d'un mélange d'asphalte et de gravillons ; et
- au moins une des fonctions parmi la captation, la transmission et la restitution de l'énergie est réalisée, au moins partiellement et de préférence intégralement, par conduction thermique à travers le ou les empilements composites multicouches.

On entend par « absorptivité thermique » d'un matériau ou d'un ensemble composite de matériaux, une capacité d'absorption de chaleur du matériau ou de l'ensemble composite de matériaux. L'absorptivité s'exprime sous la forme d'un indice sans dimension prenant une valeur comprise entre 0 et 1. Cet indice peut être mesuré comme le rapport de la quantité de chaleur absorbée sur la quantité de chaleur reçue par un matériau ou un ensemble composite de matériaux. Une valeur d'absorptivité nulle révèle une incapacité totale d'absorption de chaleur, tandis qu'une valeur d'absorptivité égale à 1 révèle une capacité totale d'absorption de chaleur. Ainsi, un matériau ou un ensemble composite de matériaux dont la valeur d'absorptivité est égale à 1 absorbe toute la chaleur lui parvenant. Il convient de reconnaître qu'aucun matériau ou ensemble composite de matériaux ne présente en réalité une incapacité ou une capacité totale d'absorption de chaleur ; tous absorbent et réfléchissent une quantité non nulle de la chaleur qu'ils reçoivent.

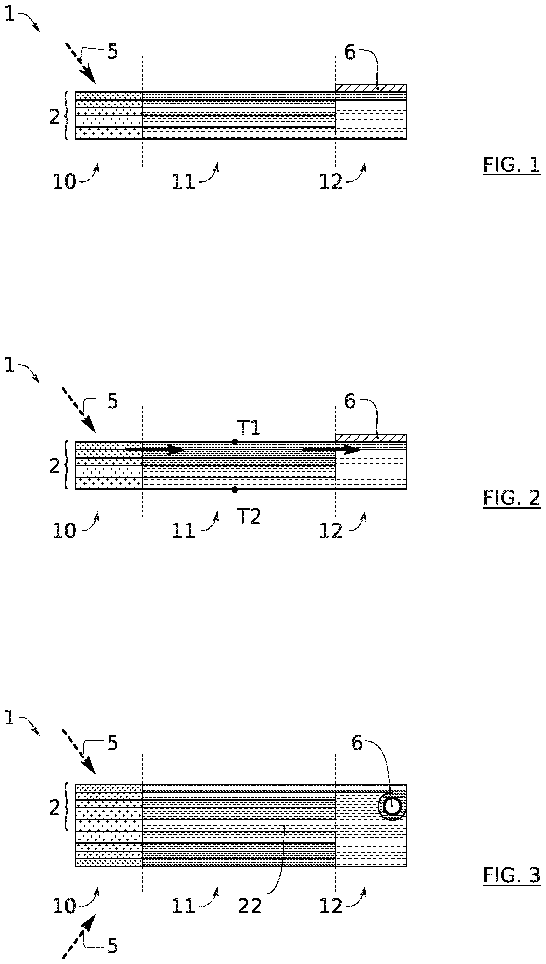

On entend par « couche » ou « sous-couche » d'un matériau, une étendue sensiblement uniforme dudit matériau. Une telle étendue s'inscrit par exemple dans un plan. Elle a deux directions principales d'extension et une troisième direction d'extension selon laquelle est prise l'épaisseur de la couche. Ici, l'épaisseur est plus particulièrement prise selon une direction perpendiculaire aux directions principales d'extension d'une couche ou d'une sous-couche. Sur les figures 1 à 6, l'épaisseur est prise selon la verticale.

Il est précisé que dans le cadre de la présente invention, le terme « sur », « surmonte », « recouvre » ou « sous-jacent » ou leurs équivalents ne signifient pas forcément « au contact de ». Ainsi, par exemple, l'agencement d'une première couche sur une deuxième couche, ne signifie pas obligatoirement que les deux couches sont directement au contact l'une de l'autre, mais cela signifie que la première couche recouvre au moins partiellement la deuxième couche en étant, soit directement à son contact, soit en étant séparée d'elle par au moins une autre couche ou au moins un autre élément.

On entend par « récupérateur thermique » un élément technique vers lequel la chaleur est destinée à être acheminée. Par exemple, le récupérateur thermique peut être au moins l'un parmi : un récupérateur à air, tel qu'un radiateur ou une pompe à chaleur, un récupérateur à eau, tel que des canalisations ou un réservoir d'eau, un récupérateur par le sol, tel qu'un puits canadien ou une centrale géothermique.

On entend par une couche à base d'un matériau A, une couche comprenant ce matériau A et éventuellement d'autres matériaux.

On entend par « zone thermique additionnelle » une zone matérielle, distincte du revêtement routier constituant la zone thermique principale, et présentant une température sensiblement constante vis-à-vis de la variabilité de la température atmosphérique. Les variations en température de la zone thermique additionnelle sont d'amplitude inférieure à celle des variations de température atmosphérique. Par exemple, la zone thermique additionnelle peut comprendre une partie superficielle de la croûte terrestre.

Comme illustré sur les figures 1 à 3, le système de régulation thermique 1 selon l'invention comprend un dispositif de captation 10 d'énergie thermique, un dispositif de restitution 12 d'énergie, de préférence thermique, et un dispositif de transmission 11 d'énergie, de préférence thermique. Le dispositif de transmission 11 est relié d'une part au dispositif de captation 10, d'autre part au dispositif de restitution 12 ; il transmet au moins une partie de l'énergie thermique captée par le dispositif de captation 10 au dispositif de restitution 12.

Le système 1 est essentiellement tel que :

- au moins deux fonctions du système de régulation 1 parmi la captation, la transmission et la restitution de l'énergie sont réalisées par conduction thermique. De préférence, ces trois fonctions sont réalisées par conduction thermique ; et
- au moins deux dispositifs parmi le dispositif de captation 10, le dispositif de transmission 11 et le dispositif de restitution 12 comprennent chacun un empilement composite multicouches 2 qui lui est potentiellement propre. De préférence, chacun de ces trois dispositifs comprend un empilement composite multicouches 2 qui lui est potentiellement propre.

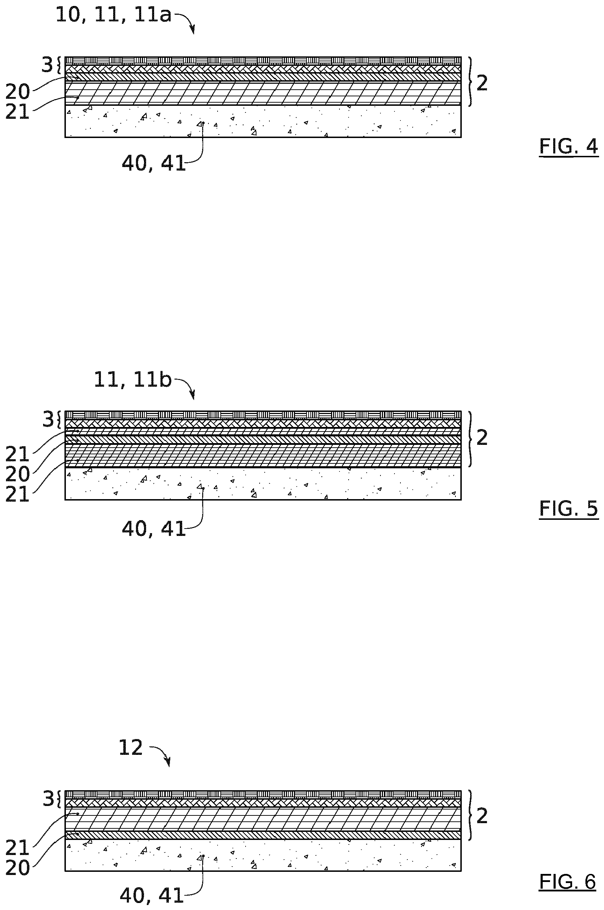

Comme illustré sur les figures 4 à 6, l'empilement composite multicouches 2 comprend au moins une couche conductrice thermique anisotrope 20 (ci-dessous parfois abrégée « couche CTA ») et au moins une couche thermiquement isolante 21.

Au moins deux parmi le dispositif de captation 10, le dispositif de transmission 11 et le dispositif de restitution 12 sont exempts de tuyaux de circulation d'un fluide caloporteur. De préférence, aucun de ces dispositifs ne comporte de tuyaux de circulation d'un fluide caloporteur. En effet, le système de régulation thermique 1 est de préférence purement passif.

Le système de régulation 1 selon un mode de réalisation de l'invention est un ensemble complexe permettant d'assurer trois fonctions thermiques de base : capter, transférer et dissiper, voire récupérer, la chaleur issue d'une source de chaleur extérieure au système, par exemple issue d'un gain solaire, pour la restituer de préférence à un ou plusieurs récupérateurs de chaleur 6. Comme cela apparaîtra clairement ci-dessous, ces trois fonctions sont réalisées à travers l'adaptation des propriétés d'absorption (aménagement ingénieux d'un gradient d'absorptivité) et des propriétés de conduction et d'isolation thermique (aménagement ingénieux d'un gradient de conductivité). Ainsi, dans un même empilement composite multicouches 2, les gradients d'absorptivité et de conduction seront adaptés et variables dans l'épaisseur de l'ensemble complexe, voire également dans le plan, que constitue l'empilement composite multicouches 2 ou une juxtaposition d'empilements composite multicouches (par une au moins de leurs tranches). Ces gradients peuvent être créés à partir d'un choix judicieux de matériaux et de nombre de couches. Le système, totalement intégré, permet de remplacer et de multi-fonctionnaliser une route ou un tronçon de route, en lui conférant en plus de ses fonctions de régulation thermique, une fonction de production d'énergie, notamment thermique, à destination d'autres équipements, ou inversement. Cette multifonctionnalité est atteinte tout en favorisant, de façon synergique, la durée de vie de la route ou du tronçon de route à travers la réduction des gradients de température auxquels la route ou le tronçon sont soumis.

Des moyens mécaniques ou manuels d'interruption de transfert thermique aux niveaux intermédiaires entre les trois dispositifs peuvent éventuellement être mis en place pour contrôler le fonctionnement du système de régulation, et notamment pour pouvoir interrompre le fonctionnement du système de régulation. En particulier, le dispositif de transmission 11 peut être relié à au moins l'un parmi le dispositif de captation 10 et le dispositif de restitution 12 par des interrupteurs de flux thermiques configurés pour interrompre et rétablir successivement les flux thermiques entre le dispositif de transmission 11 et au moins l'un parmi le dispositif de captation 10 et le dispositif de restitution 12, respectivement. Les interrupteurs de flux thermiques peuvent comprendre au moins l'un parmi : un réflecteur, un dispositif à base d'un matériau intelligent (dit « smart materials »), tel qu'un capteur bilame par exemple, et peuvent être agencés conjointement à un sélectionneur manuel tel qu'un interrupteur de type « jumper ». Ces différents moyens d'interruption peuvent être complémentaires entre eux.

Quoiqu'il en soit, une régulation naturelle des flux thermiques se fera par gradient thermique prédominant entre la source chaude, ici le revêtement routier exposé au rayonnement solaire, et un récupérateur thermique et/ou entre la source chaude et une zone thermique additionnelle (sol, réservoir d'eau, piscine...). La zone thermique additionnelle sert par exemple à dissiper les excédents de chaleur en été, lorsque la zone thermique additionnelle est plus froide que le revêtement routier ; la chaleur s'oriente en effet naturellement dans la direction des gradients thermiques supérieurs. En cas de déficit de captation de chaleur, c'est-à-dire lorsque le revêtement routier est plus froid que la zone thermique additionnelle, cette dernière peut servir de support à la régulation de la quantité d'énergie restituée au récupérateur thermique 6. Selon son mode de réalisation préféré, le système de régulation 1 est donc naturellement réversible. Le dispositif de transmission 11, notamment, peut s'étendre de sorte à être relié à une zone thermique additionnelle à laquelle un excès d'énergie thermique capté par le dispositif de captation 10 peut être restitué ou depuis laquelle une énergie thermique peut être captée pour compenser un déficit d'énergie thermique captée par le dispositif de captation.

Une attention particulière sera portée à l'interface entre les différents dispositifs thermiques lors de leur mise en place. Un procédé d'installation prescriptif au niveau des interfaces pourra également être défini au cas par cas, notamment en fonction de la position latérale de chacune de ces interfaces par rapport à la route. Par exemple, la couche CTA 20 ou la couche thermiquement isolante 21, voire les deux couches, d'un premier des trois dispositifs peut être prolongée pour constituer respectivement la couche CTA 20 ou la couche thermiquement isolante 21, voire deux couches, d'un second des trois dispositifs, le second dispositif étant adjacent au premier, afin de garantir une parfaite continuité des fonctions thermiques. L'invention n'est toutefois pas limitée à cet exemple.

En référence aux figures 4 à 6, l'empilement composite multicouches 2 comprend une couche conductrice thermique anisotrope 20. Cette dernière peut comprendre une âme ou une plaque ou un matériau dit de renfort (fibres, filaments, grilles, tresses, treillis, tissus, nappes...) à très fort coefficient de conduction et/ou d'absorptivité thermique. Elle est combinée à une couche thermiquement isolante 21. Cette dernière peut être à base d'un matériau isolant qui est de préférence adapté à une intégration à la route, à savoir qui permet à l'ensemble de résister aux contraintes auxquelles la route est soumise en fonction de son usage. La couche thermiquement isolante 21 peut comprendre un matériau à base d'un mélange de gravillons et de liant hydraulique routier (LHR), tel que du bitume, coulé ou déposé lors de l'installation du système 1. Les gravillons constituant en partie la couche thermiquement isolante 21 sont de préférence des gravillons de pierre non réfractaire et isolante thermique, par exemple une pierre pauvre en silice. La couche thermiquement isolante 21 peut comprendre en outre des charges isolantes telles que des fibres végétales et/ou minérales. Les fibres minérales sont issues de roches (exemples : amiante, wollastonite, sépiolite) ou sont des fibres minérales synthétiques. Potentiellement, l'âme, la plaque ou le matériau de renfort de la couche CTA 20 peut être directement intégré au matériau isolant de la couche thermiquement isolante 21 ou dans une partie de l'épaisseur de la couche de matériau isolant de la couche thermiquement isolante 21. Le cas échéant, un revêtement 3 de surface extérieure tel qu'un enrobé est prévu qui vient directement ou indirectement recouvrir l'une ou l'autre parmi la couche CTA 20 et la couche thermiquement isolante 21. Le revêtement 3 est par exemple à base d'au moins l'un parmi : un mélange d'asphalte et de gravillons, un liant hydraulique routier tel qu'un bitume, un liant bitume noir, un liant bitume transparent, des gravillons, de préférence des gravillons de pierre non réfractaire, des gravillons en verre, des gravillons en polymère, notamment de type acrylique ou polycarbonate. La taille des gravillons constituant potentiellement en partie le revêtement routier 3 n'est pas imposée et doit être adaptée en fonction des conditions de circulation (suivant les principes normatifs de construction routière). Le revêtement 3 peut en outre comprendre des charges absorbantes thermiques telles que des fibres de carbone, des fibres métalliques, des résidus type scories métalliques, de la poudre de graphite, etc.

L'ensemble composite que constitue l'empilement composite multicouches 2 est de structure rigide ou flexible dans les directions d'extension principales de ses couches, adaptable en épaisseur, en densité, en conductivité thermique et en absorptivité, et déployable sur de grandes surfaces planes ou courbes, continues ou non, de préférence lisses, mais éventuellement texturées ou plus simplement irrégulières. Plus particulièrement, au moins un empilement composite multicouches 2 peut comprendre le revêtement 3 recouvrant une face de l'une parmi la couche conductrice thermique anisotrope 20 et la couche thermiquement isolante 21, cette face étant orientée vers une source de chaleur extérieure au système, ici essentiellement le soleil.

Le principe de l'invention consiste notamment à exploiter la captation, par conduction, rayonnement ou convection, par la couche conductrice thermique anisotrope 20, de l'ensoleillement incident ou de la chaleur issue de sources d'énergie thermique environnantes, pour son acheminement et sa restitution, de préférence par conduction, à au moins un récupérateur thermique 6.

L'assemblage des couches du composite peut se faire sur le chantier ou préalablement en usine pour une pose sur site.

La couche CTA 20 s'étend principalement dans un plan. Elle est configurée pour présenter, dans au moins une direction comprise dans ledit plan, une conductivité thermique supérieure, de préférence d'au moins deux ordres de grandeur, voire d'au moins quatre ordres de grandeur, à sa conductivité thermique dans une direction perpendiculaire audit plan. Plus particulièrement, la conductivité thermique de la couche CTA 20 dans au moins une de ses deux directions d'extension principales est supérieure à 100 $W \cdot m^{-1} \cdot K^{-1}$, de préférence comprise entre 400 $W \cdot m^{-1} \cdot K^{-1}$ et 6000 $W \cdot m^{-1} \cdot K^{-1}$, et la conductivité thermique de la couche CTA 20 dans une direction perpendiculaire à ses deux directions d'extension principales est inférieure à 0,1 $W \cdot m^{-1} \cdot K^{-1}$, de préférence inférieure à 0,04 $W \cdot m^{-1} \cdot K^{-1}$.

A cette fin, la couche CTA 20 peut comprendre au moins l'une parmi une feuille conductrice thermique, une grille conductrice thermique et une pluralité de fibres. La feuille ou grille conductrice thermique est par exemple constituée à base d'un matériau choisi parmi l'aluminium, le cuivre, l'acier et le graphite. La pluralité de fibres comprend au moins une pluralité de fibres conductrices. Le caractère conducteur de la fibre conductrice peut s'entendre comme relevant d'une conduction thermique et électrique. Une fibre peut former à elle seule un fil, de préférence un fil métallique. Alternativement, une pluralité de fibres forme un fil. Ainsi, dans le cadre de la présente invention, le terme « fibre » englobe aussi bien : des fibres individuelles ; des fibres formant un fil lorsqu'elles sont associées les unes aux autres ; des fils formés chacun d'une seule fibre.

L'empilement composite multicouches 2 comprend au moins deux couches, dont au moins la couche CTA 20 et la couche thermiquement isolante 21, configurées entre elles pour générer au moins l'un parmi : un gradient d'absorptivité thermique et un gradient de conductivité thermique dans l'épaisseur de l'empilement 2.

De manière générale, la couche CTA 20 présente une absorptivité thermique et une conductivité thermique respectivement supérieures à celles de la couche thermiquement isolante 21. L'absorptivité thermique et la conductivité thermique varient dans l'épaisseur de l'empilement composite multicouches 2 de façon monotone, comme illustré sur les figures 1 et 2, ou de façon non monotone, et en particulier de façon infléchie, comme illustré sur la figure 3.

Le revêtement 3 peut lui aussi contribuer au gradient d'absorptivité thermique et/ou au gradient de conductivité thermique, soit en présentant une absorptivité thermique et/ou une conductivité thermique s'inscrivant dans la continuité du gradient d'absorptivité thermique et/ou du gradient de conductivité thermique générée par l'association de la couche CTA 20 et la couche thermiquement isolante 21, soit en contribuant à augmenter, ou à diminuer, la quantité de chaleur incidente sur l'une et/ou l'autre parmi la couche CTA 20 et la couche thermiquement isolante 21.

La figure 1 illustre un schéma de principe d'un mode de réalisation de l'invention. Le dispositif de captation 10 comprend un empilement composite multicouches 2 dont la couche présentant la plus grande absorptivité thermique est orientée vers une source de chaleur 5, tel que le rayonnement solaire. Le dispositif de transmission 11 prolonge l'empilement composites multicouches 2 du dispositif de captation 10, sur au moins une partie de son épaisseur, par un empilement composite multicouches 2 qui peut être soit parfaitement ou partiellement identique, soit parfaitement différent, de l'empilement composite multicouches 2 du dispositif de captation 10. La ou les couches suivantes dans l'empilement composite multicouches 2 du dispositif de captation 10 présentent une absorptivité thermique de préférence de plus en plus réduite. Ainsi, l'énergie thermique captée par le dispositif de captation 10 est contrainte en ce qu'elle ne diffuse que difficilement dans l'épaisseur de l'empilement composite multicouches 2 du dispositif de captation 10 ; l'énergie thermique captée sera davantage diffusée par la ou les couches de plus grande conductivité thermique vers le dispositif de transmission 11, pour peu que le gradient thermique entre le dispositif de captation 10 et le dispositif de transmission 11 y soit favorable, ce qui sera le cas en particulier si le dispositif de transmission est au moins partiellement enterré ou recouvert d'un matériau isolant thermique ou constitue une partie au moins d'un soubassement d'un trottoir.

L'empilement composite multicouches 2 du dispositif de transmission 11 comprend une couche présentant une plus grande conductivité thermique, cette couche étant orientée vers la source de chaleur 5. Elle prolonge par exemple la couche de plus grande absorptivité thermique du dispositif de captation 10 et peut être de même nature. Les couches suivantes dans l'empilement composite multicouches 2 du dispositif de transmission 11 présentent une conductivité thermique de préférence de plus en plus réduite. Ainsi, l'énergie thermique captée par le dispositif de captation 10 est transmise au dispositif de transmission 11 principalement au niveau de sa couche de plus grande conductivité thermique. La présence de couches sous-jacentes de conductivité thermique réduite limite la diffusion de l'énergie thermique dans l'épaisseur de l'empilement composite multicouches 2 du dispositif de transmission 11. Dès lors, une grande majorité de l'énergie thermique captée par le dispositif de captation 10 est transmise par le dispositif de transmission 11 au dispositif de restitution 12.

Le dispositif de restitution 12 comprend également un empilement composite multicouches 2 dont la couche conductrice thermique anisotrope 20 est agencée de sorte à être orientée vers un récupérateur de chaleur 6, extérieur au système, auquel l'énergie captée et transmise est à restituer. L'empilement composite multicouches 2 du dispositif de restitution 12 comprend également une couche thermiquement isolante 21 qui recouvre la couche CTA 20 sur un côté opposé au récupérateur de chaleur 6. Ainsi agencée, la couche thermiquement isolante 21 du dispositif de restitution 12 limite la diffusion de l'énergie thermique dans une direction opposée au récupérateur de chaleur.

Ces précédentes considérations sont illustrées schématiquement sur la figure 2 où les flèches représentent le chemin privilégié de conduction de l'énergie thermique d'une part entre le dispositif de captation 10 et le dispositif de transmission 11, d'autre part entre le dispositif de transmission 11 et le dispositif de restitution 12. En supposant que, de part et d'autre de son épaisseur, les faces du dispositif de transmission 11 sont respectivement aux températures T1 et T2, avec T1 supérieure à T2, le flux thermique $\Phi$ par unité de surface à travers l'épaisseur e du dispositif de transmission dépend de la conductivité thermique $\lambda_i$ et de l'épaisseur $e_i$ du matériau des $i$ différentes couches de l'empilement composite multicouches 2 du dispositif de transmission 11. Plus globalement, le flux thermique par unité de surface est donné

$$\Phi = \frac{\lambda}{e}(T1 - T2),$$

par l'équation : où la conductivité thermique $\lambda$ dépend des conductivités thermiques $\lambda_i$ des matériaux des $i$ différentes couches de l'empilement composite multicouches 2. Ainsi, une multiplication de l'épaisseur e du dispositif de transmission 11 entre ces faces aux températures respectives T1 et T2 par un nombre $n$ conduit à une division du flux thermique par ce même nombre, soit à une augmentation du gradient thermique entre T1 et T2. Une augmentation du nombre de couches permettra de réduire les pertes thermiques en ligne en profondeur dans la zone de transmission, privilégiant la direction du flux thermique dans le plan et dans les endroits d'intérêt (canalisation du flux thermique).

La figure 3 illustre un schéma de principe d'un autre mode de réalisation de l'invention. Selon cet autre mode de réalisation, le gradient d'absorptivité thermique et/ou de conductivité thermique de l'un au moins parmi le dispositif de captation 10 et le dispositif de transmission 11 n'est pas monotone, mais infléchi. L'empilement composite multicouches 2 constituant au moins en partie l'un au moins parmi le dispositif de captation 10 et le dispositif de transmission 11 présente alors par exemple une configuration multicouches sensiblement symétrique dans son épaisseur, du moins du point de vue de son comportement thermique. Notons aussi, et nous le détaillerons plus bas, que le comportement thermique symétrique de ce mode de réalisation du système 1 peut se traduire par une certaine symétrie des couches de matériaux constituant l'empilement composite multicouches 2.

Le mode de réalisation illustré sur la figure 3 est particulièrement adapté au cas où une première source de chaleur 5 se trouve d'un côté du système de régulation 1 et une seconde source de chaleur 5 se trouve de l'autre côté du système de régulation 1. La première source de chaleur 5 peut être une source de chaleur extérieure à la route à laquelle le système de régulation 1 est intégré, tandis que la seconde source de chaleur 5 peut être une source de chaleur sous-jacente ou latérale à la route, par exemple une conduite d'aération, un transformateur, des câbles électriques, des conduites de gaz ou tout ou partie d'un dispositif géothermique, ces équipements faisant le cas échéant parties d'un complexe enterré ou situé en bord de route. Par similitude avec le comportement thermique explicité ci-dessus en référence aux figures 1 et 2, il apparaît que l'énergie thermique captée par le dispositif de captation 10 depuis chacune des première et seconde sources de chaleur 5 va suivre son propre chemin de conduction thermique, de façon quasiment indépendante, en étant contrainte de diffuser par conduction au sein des couches de plus forte absorption thermique et de plus forte conductivité thermique de l'empilement composite multicouches 2 du dispositif de captation 10 et du dispositif de transmission 11 respectivement.

Notons que, comme illustré sur la figure 3, au moins une couche conductrice thermique anisotrope 20 du dispositif de transmission 11 peut se prolonger au-delà du dispositif de transmission 11 pour former respectivement au moins une couche conductrice thermique anisotrope 20 du dispositif de restitution 12.

Notons également, qu'à la différence du mode de réalisation illustré sur les figures 1 et 2, la couche conductrice thermique anisotrope 20 du dispositif de restitution 12, tel qu'illustré sur la figure 3, est configurée pour s'enrouler autour d'une canalisation dans laquelle est destiné à circuler un fluide caloporteur, tel que de l'eau, pour former tout ou partie d'un récupérateur de chaleur 6. La couche thermiquement isolante 21 du dispositif de restitution 12 enrobe au moins en partie la couche conductrice thermique anisotrope 20 du dispositif de restitution 12. La canalisation fait alors partie d'un récupérateur de chaleur 6 auquel l'énergie thermique captée et transmise est ainsi restituée. Il est à noter en outre que, lorsque l'empilement composite multicouches du dispositif de transmission 11 est symétrique dans son épaisseur, ses deux couches conductrices thermiques anisotropes 20 peuvent être enroulées sur au moins une partie de la canalisation illustrée sur la figure 3.

D'autres récupérateurs de chaleur 6 sont envisageables ; ils peuvent prendre la forme d'un caloduc, voire constituer en partie une pompe à chaleur ou une centrale géothermique. De façon générale, toute zone froide peut constituer un récupérateur de chaleur 6 pour le système de régulation thermique 1 selon l'invention.

À titre indicatif, l'empilement composite multicouches 2 du dispositif de captation 10 peut présenter une absorptivité thermique variant d'une valeur comprise entre 0,3 et 1 pour au moins une couche de l'empilement orientée vers une source de chaleur 5 extérieure au système à une valeur inférieure à 0,3 pour au moins une couche de l'empilement orientée à l'opposé de la source de chaleur 5.

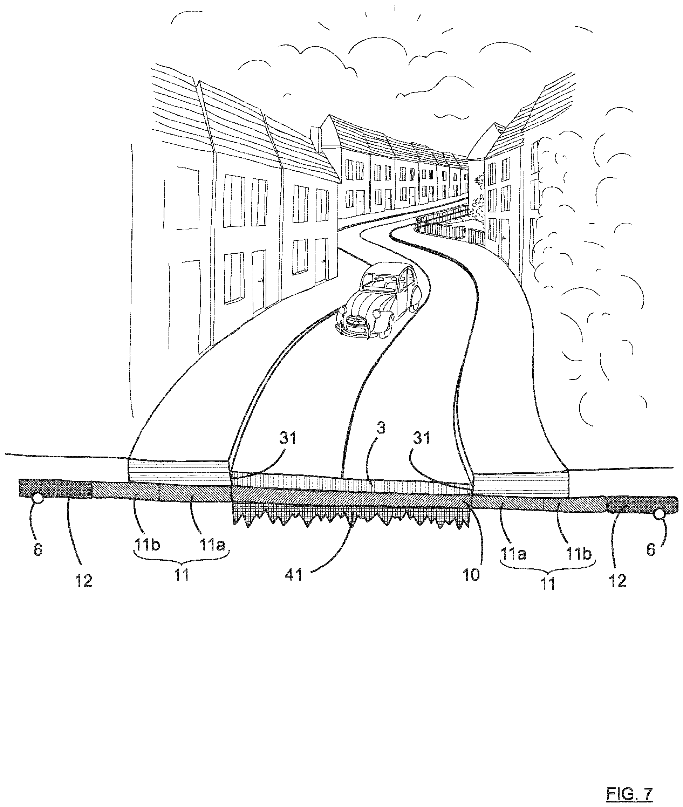

Par ailleurs, en référence à la figure 7, l'empilement composite multicouches du dispositif de transmission 11 peut présenter, au moins sur une première portion 11a s'étendant depuis le dispositif de captation 10, une absorptivité thermique variant d'une valeur comprise entre 0,3 et 1 pour au moins une couche de l'empilement orientée vers une source de chaleur par gain solaire à une valeur inférieure à 0,3 pour au moins une couche de l'empilement orientée à l'opposé de la source de chaleur comme illustré sur la figure 1 ou sensiblement au centre de l'empilement comme illustré sur la figure 3.

Il est en effet possible que le dispositif de transmission 11 ne soit pas constitué de la même façon sur toute son étendue. Il peut ainsi présenter différentes portions 11a, 11b agencées de façon adjacente entre elles, de préférence entre le dispositif de captation 10 et le dispositif de restitution 12. Cette possibilité peut supposer une rupture dans la continuité d'au moins une couche constituant le dispositif de transmission 11. En alternative ou en complément, cette possibilité peut supposer un changement de section d'au moins une couche du dispositif de transmission 11 entre deux portions 11a, 11b adjacentes du dispositif de transmission 11 ou entre une portion du dispositif de transmission 11 et l'un parmi le dispositif de captation et le dispositif de restitution 12 adjacent à ladite portion.

Ainsi, en référence à la figure 7, l'empilement composite multicouches 2 du dispositif de transmission 11 peut présenter, au moins sur une deuxième portion 11b s'étendant depuis le dispositif de restitution 12, une absorptivité thermique variant d'une valeur comprise entre 0,3 et 1 pour au moins une couche intermédiaire 22 de l'empilement (cf. figure 3) à une valeur inférieure à 0,3 pour au moins une des couches de l'empilement situées de part et d'autre de la couche intermédiaire 22. Cette dernière configuration est particulièrement adaptée à une intégration du dispositif de transmission 11 sous une portion de la chaussée ou une portion en bordure de la chaussée, par exemple au moins sous une portion de trottoir, qui n'est pas exposée à une source de chaleur 5. La deuxième portion 11b du dispositif de transmission 11 a alors essentiellement pour fonction thermique la transmission de l'énergie thermique, et de façon négligeable, voire nulle, une fonction de captation de l'énergie thermique. En l'absence de captation d'énergie thermique par le dispositif de transmission 11, il est préférable que cette deuxième portion du dispositif de transmission 11 s'étende sur une longueur limitée de préférence inférieure à 10 m.

Comme illustré sur les figures 4 à 6, chaque revêtement composite multicouches 2 peut être destiné à couvrir un soubassement 40 de la route, le cas échéant par l'intermédiaire d'une sous-couche de lissage 41 pour absorber les irrégularités du soubassement 40 et offrir une surface de dépôt relativement plane à l'empilement composite multicouches 2.

Le soubassement 40 comprend de façon conventionnelle :

- au-dessus du niveau de terrassement général, une couche de forme qui est fonction de la nature du terrain,
- au-dessus de la couche de forme, une couche de fondation comprenant par exemple de la grave traitée aux liants hydrauliques (ciment, laitier...), ou encore traitée aux liants hydrocarbonés (bitume), ou traitée aux cendres volcaniques,
- au-dessus de la couche de fondation, une couche granulaire.

L'adhésion à l'interface entre le système 1 et la couche granulaire sous-jacente peut être garantie par un liant hydraulique routier (LHR), typiquement du bitume, coulé ou déposé lors de l'installation et constituant le cas échéant tout ou partie de la couche de lissage 41.

La figure 4 illustre un dispositif de captation 10 et/ou un dispositif de transmission 11 du système de régulation 1 selon un mode de réalisation de l'invention. L'empilement composite multicouches 2 comprend :

- une couche thermiquement isolante 21 recouvrant, de préférence directement, le soubassement 40 ou le cas échéant la sous-couche de lissage 41,
- une couche CTA 20 recouvrant, de préférence directement, la couche thermiquement isolante 21 et
- un revêtement routier 3 recouvrant, de préférence directement, la couche CTA 20.

Selon un mode de réalisation particulier, le revêtement 3 peut comprendre un enrobé se présentant, par exemple, sous la forme d'un mélange d'asphalte ou de bitume et de gravillons. La couche CTA 20 peut comprendre un mélange composite de fibres de carbone et de membrane goudronnée, par exemple une membrane active bitume, avec le cas échéant armature grille et voile de verre. La couche thermiquement isolante 21 peut être à base d'au moins un matériau isolant pris parmi : un asphalte et un polymère. La couche thermiquement isolante 21 peut comprendre une unique couche pour assurer sa fonction d'isolation ou deux ou trois couches thermiquement isolantes 21 pour accentuer la diffusion de la chaleur dans la couche CTA 20 par effet de réflexion de la chaleur et contribuer à l'étanchéité.

La figure 5 illustre un dispositif de transmission 11 du système de régulation 1 selon un mode de réalisation de l'invention qui diffère du dispositif de transmission 11 tel qu'illustré sur la figure 4 en ce qu'il comprend en outre une couche thermiquement isolante 21 disposée, de préférence directement, sur la couche CTA 20 et sous le revêtement 3. Un tel dispositif de transmission 11 permet d'obtenir, du point de vue des gradients d'absorptivité et de conductivité, une configuration telle que celle illustrée sur la figure 3.

La figure 6 illustre un dispositif de restitution 12 du système de régulation 1 selon un selon un mode de réalisation de l'invention qui diffère du dispositif de captation 10 tel qu'illustré sur la figure 4 en ce que les places dans l'empilement de la couche CTA 20 et de la couche thermiquement isolante 21 sont inversées.

Sur les figures 4 à 6, chaque revêtement 3 est illustré comme appartenant à chacun des empilements composites multicouches 2 illustrés. Dans ce cas, chaque revêtement 3 peut être considéré comme participant à la création des gradients d'absorptivité et de conductivité de l'empilement composite multicouches 2 auquel il appartient. L'invention n'est toutefois pas limitée à une telle intégration du revêtement 3 dans un quelconque empilement composite multicouches 2. En outre, les revêtements 3, tels qu'illustrés sur les figures 4 à 6, peuvent être de natures différentes entre elles. Notamment, le revêtement 3 du dispositif de captation 10 peut être un revêtement routier, tandis que le revêtement 3 du dispositif de restitution peut constituer tout ou partie d'un trottoir.

Un exemple d'intégration du système de régulation 1 selon l'invention est illustré sur la figure 7. Le dispositif de captation 10 tel qu'illustré est configuré pour constituer au moins en partie le soubassement du revêtement 3 et le dispositif de restitution 12 est agencé de façon déportée, par exemple d'une distance comprise entre 1 cm et 10 m, de préférence comprise entre 10 cm et 2 m, par rapport à un bord latéral 31 du revêtement routier 3. Le dispositif de transmission 11 permet d'assurer la transmission de l'énergie thermique entre le dispositif de captation 10 et le dispositif de restitution 12.

Le système de régulation thermique 1 proposé est une solution passive permettant la gestion (l'extraction mais aussi l'acheminement) par conduction de la chaleur emmagasinée dans une chaussée.

L'empilement composite multicouches 2 est en fait avantageusement composé de matériaux de construction, qui assurent les fonctions thermiques du système 1, et peuvent être connus par ailleurs comme matériaux de construction de route.

Le système 1, totalement intégré, permet de remplacer partiellement et de multi-fonctionnaliser une route et le cas échéant ses abords tout en favorisant de façon synergique la durée de vie de l'ensemble des matériaux constitutifs de la route, et notamment du revêtement 3, à travers la réduction des gradients de température auxquels les matériaux constitutifs de la route sont soumis quotidiennement et/ou de façon saisonnière.

Contrairement aux systèmes actifs existants, le système tel que proposé ci-dessus ne nécessite pas de prendre en compte des contraintes d'étanchéité pour diminuer le risque de fissures des canalisations dans lesquelles le fluide caloporteur circule.

Également, le système proposé est peu onéreux à la fabrication, à l'installation et à l'entretien. Sa fabrication peut être réalisée en usine ou sur site.

Ensuite, si l'offre pour des systèmes actifs existants est réduite sur le marché à l'heure actuelle, il est espéré une augmentation significative de l'offre dans les années à venir, grâce notamment à la flexibilité et à l'adaptabilité du système de régulation thermique 1 selon l'invention, à tout type de chaussée et à tout site intégrant une chaussée.

Le système de régulation thermique 1 selon le mode de réalisation préféré de l'invention est avantageusement indépendant de l'utilisation de ventilateurs, notamment pour le cheminement de la chaleur. La production thermique en air préchauffé ou en eau préchauffée se fait de manière dissociée de la captation, la transmission et la restitution de l'énergie thermique. Elle est en effet réalisée par couplage du dispositif de restitution 12 avec un récupérateur thermique 6, voire avec un dissipateur thermique, externe au système de régulation thermique 1.

Enfin, sa durée de vie n'est pas limitée en particulier, comme c'est le cas des systèmes existants. Au contraire, par complémentarité des propriétés mécaniques et thermiques de chaque matériau mis en oeuvre dans le système de régulation thermique 1 selon l'invention, la durée de vie globale de la route est améliorée et le besoin d'entretien et réduit. Effectivement, par effet thermomécanique, le système de régulation thermique 1 selon l'invention permet d'atteindre une limitation du fluage du revêtement de la chaussée (notamment lorsque celle-ci est en bitume), un renforcement de la liaison mécanique entre le revêtement routier et son soubassement, une limitation de l'apparition des nids de poule et des arrachements de matériaux environnants, et une amélioration de l'adhésion entre les interfaces des différentes sous-couches de la chaussée, par rapport aux systèmes de régulation thermique existants.

Le système de régulation thermique 1 selon l'invention est basé sur un principe adapté et modulable en fonction des changements saisonniers. Il permet en effet l'acheminement de la chaleur, mais également la dissipation des excédents de chaleur, par conduction thermique vers les zones plus froides (une zone thermique additionnelle le cas échéant) ou vers un récupérateur thermique 6. En période chaude, par gradients thermiques supérieurs, la chaleur captée et transmise peut être soit dissipée dans le sol en tant que zone thermique additionnelle, soit transférée vers des applications thermiques, notamment pour le chauffage de piscine, le préchauffage d'eau sanitaire, une centrale de traitement d'air, un système de déshumidification d'air, un système de séchage, etc.

De plus, comme l'illustre un certain nombre de modes de réalisation décrits ci-dessus, les fonctions de captation thermique et de transmission thermique peuvent être réalisées en parallèle, notamment en cas d'exposition du dispositif de captation 10 et du dispositif de transmission 11, en particulier de la première portion 11a du dispositif de transmission 11, à la source de chaleur 5, y compris lors de l'acheminement de la chaleur. En cas de distinction des deux fonctions thermiques, le dispositif de transmission 11 ne faisant alors que transmettre l'énergie thermique captée par le dispositif de captation 10, il peut être préféré de limiter la distance sur laquelle le dispositif de transmission 11 doit acheminer l'énergie thermique pour parvenir au dispositif de restitution 12.

Que le système soit installé sur une route en construction ou en réfection, pour une efficacité d'absorption (zone de captation) et une efficacité de conduction thermique (zone de transmission) maximales, le système peut remplacer tout ou partie des couches superficielles à base d'enrobé bitume (couches de surfaces et couche de base bitumineuse) des routes conventionnelles, tout en assurant les fonctions de ces couches superficielles.

Un mode de réalisation d'intégration du système 1 dans les couches superficielles d'un revêtement routier 3 peut comprendre les étapes suivantes :

- la mise en place d'une couche arrière isolante thermique 21 composée d'un mélange de LHR et de gravillons, ainsi que des charges à pouvoir isolant thermique, et plus particulièrement :

   ○ Un liant hydraulique routier, tel que du bitume noir,
   ○ Des gravillons : en pierre, de préférence non réfractaire et isolante thermique (pauvre en silice),
   ○ Des charges isolantes : fibres végétales et minérales ;

- La pose de la CTA 20 collée à la couche arrière isolante thermique 21 grâce à un liant hydraulique (pose avant séchage) ou par l'ajout d'un film à base de liant hydraulique ;
- Le dépôt d'une couche avant absorbante thermique (sur tout ou une partie de sa surface), en tant que revêtement routier 3, comprenant par exemple :

   ○ Un LHR, tel que du bitume ou un liant bitume noir ou transparent,
   ○ Des gravillons : en pierre non réfractaire, de préférence en verre ou polymère de type acrylique ou polycarbonate, et

◦ Des charges absorbantes, telles que des fibres carbone, des fibres métal, des résidus de type scories métalliques ou de la poudre graphite.

L'invention n'est pas limitée aux modes de réalisations précédemment décrits et s'étend à tous les modes de réalisation couverts par les revendications.

Notamment, le dispositif de transmission 11 peut se présenter sous la forme d'une pluralité de bandes dudit empilement composite multicouches 2. Chaque bande est alors reliée par une de ses extrémités au dispositif de captation 10 et par l'autre de ses extrémités au dispositif de restitution 12.

Par exemple, la couche conductrice thermique anisotrope 20 peut comprendre une simple plaque en aluminium, isolée ou non.

Par exemple, si la source de chaleur 5 principalement envisagée consiste en le rayonnement solaire, d'autres sources de chaleur sont envisageables, en alternative ou en complément.

En outre, le nombre de couches superposées dans chaque empilement composite multicouches 2 peut varier en fonction des besoins, et notamment en fonction de la situation géographique de la route, de son exposition au rayonnement solaire, de sa composition initiale. Par exemple, l'un quelconque des revêtements composites multicouches peut comprendre en plus de la couche CTA et de la couche thermiquement isolante, une troisième couche disposée entre la couche CTA et la couche isolante ou au-dessus de la couche CTA.

Lorsque la troisième couche est disposée entre la couche CTA et la couche thermiquement isolante, elle doit avoir des propriétés de capacité thermique particulières, afin de ne pas favoriser le stockage de la chaleur dans la route, mais au contraire contribuer à son transfert vers le dispositif de restitution ou le récupérateur thermique. Ses propriétés d'absorption n'entrent pas en jeu ici, puisqu'elle n'est pas exposée directement à la source de chaleur que constitue la route soumise au rayonnement solaire. Par exemple, elle peut avoir une faible masse et une chaleur massique moyenne, ou une masse moyenne et une faible chaleur massique. La troisième couche est de préférence plus fine, voire très fine, par rapport aux deux autres couches afin qu'elle ne puisse pas stocker une quantité significative d'énergie thermique. La troisième couche a donc de préférence une masse au plus égale à celle de la couche isolante thermique.

Lorsque la troisième couche est disposée au-dessus de la couche CTA, elle peut constituer une couche supérieure de la chaussée ayant des propriétés thermiques, optiques et mécaniques, par exemple en termes de drainage, avantageuses. Ses propriétés thermiques et optiques peuvent correspondre à celle de la couche CTA avec une transmittivité supérieure ou égale à 0,5. Par exemple, une telle troisième couche comprendrait un bitume transparent et des billes de verre routier.

Également, le système de régulation thermique 1 selon l'invention est compatible avec des contraintes thermiques locales nécessitant un transfert thermique local à travers le dispositif de captation 10 et/ou le dispositif de transmission 11 en vue de protéger les zones plus fragiles de la route d'un échauffement local de la chaussée, par exemple une zone localement définie du soubassement de la route, sur lesquelles l'un ou l'autre des dispositifs de captation 10 et de transmission 11 est intégré. Par exemple, une portion de la couche thermiquement isolante 21 peut être retirée au droit de ladite zone ou peut être remplacée par une couche moins isolante, voire thermiquement conductrice. Ainsi, le transfert de chaleur de part et d'autre de l'empilement composite multicouches 2 n'est pas incompatible avec le système de régulation thermique 1 selon l'invention, dès lors que ce transfert reste local.

Une autre variante envisagée de l'invention pourrait comprendre, pour le dispositif de captation 10, voire pour une partie du dispositif de transmission 11, l'utilisation d'une CTA 20 à forte rugosité grâce à l'adaptation possible de noeuds de fibres tissées ou d'une grille métallique imitant la granulosité (gravillons) du revêtement routier 3.

Dans cette variante, la couche CTA 20 est simplement recouverte de LHR chargé de matériaux absorbants tels que précisés précédemment. Une attention particulière de cette variante sera portée à l'adaptation de l'épaisseur de la couche de LHR chargée, afin qu'elle ne comble, ni ne lisse, la granulosité de la couche CTA 20 rugueuse. L'avantage de cette variante consiste notamment en ce que la rugosité peut être définie dès la phase de fabrication en usine, facilitant et accélérant la phase d'installation sur site. De plus, contrairement à une pose classique de couches superficielles conventionnelles, il serait possible de contrôler finement la rugosité du revêtement routier 3 et ainsi limiter les bruits de roulement de façon plus efficace, partager la route en différentes zones de circulation, etc.

## Revendications

1. Système de régulation thermique (1) destiné à être agencé conjointement avec un revêtement routier (3) pour en réguler la température, le système comprenant un dispositif de captation (10) d'énergie thermique, un dispositif de restitution (12) d'au moins une partie de l'énergie captée, et un dispositif de transmission (11) d'énergie relié d'une part au dispositif de captation (10), d'autre part au dispositif de restitution (12) pour transmettre au moins une partie de l'énergie captée au dispositif de restitution (12), dans lequel au moins le dispositif de captation (10) est destiné à être au moins en partie agencé sous le revêtement routier (3) et est configuré pour être en conduction thermique avec le revêtement routier (3),

le système (1) étant **caractérisé en ce que** le dispositif de restitution comprend un empilement composite multicouches (2), **en ce qu'**au moins l'un parmi le dispositif de captation (10) et le dispositif de transmission (11) comprend un empilement composite multicouches (2) différent de l'empilement composite multicouches (2) que comprend le dispositif de restitution, chaque empilement composite multicouches (2) comprenant au moins une couche conductrice thermique anisotrope (20) et au moins une couche thermiquement isolante (21), au moins deux fonctions correspondantes parmi la captation, la transmission et la restitution de l'énergie étant ainsi réalisées par conduction thermique, et **en ce qu'**au moins le dispositif de captation (10) et le dispositif de transmission (11) sont exempts de tuyaux de circulation d'un fluide caloporteur.

2. Système (1) selon la revendication précédente, dans lequel l'empilement composite multicouches (2) comprend au moins deux couches, dont au moins la couche conductrice thermique anisotrope (20) et la couche thermiquement isolante (21), configurées entre elles pour générer au moins l'un parmi: un gradient d'absorptivité thermique et un gradient de conductivité thermique dans l'épaisseur de l'empilement, la couche conductrice thermique anisotrope (20) présentant une absorptivité thermique et une conductivité thermique respectivement supérieures à celles de la couche thermiquement isolante (21), l'absorptivité thermique et la conductivité thermique variant dans l'épaisseur de l'empilement composite multicouches (2) de façon monotone.

3. Système (1) selon la revendication 1, dans lequel l'empilement composite multicouches (2) comprend au moins trois couches, dont au moins la couche conductrice thermique anisotrope (20) et la couche thermiquement isolante (20), configurées entre elles pour générer au moins l'un parmi : un gradient d'absorptivité thermique et un gradient de conductivité thermique dans l'épaisseur de l'empilement, la couche conductrice thermique anisotrope (20) présentant une absorptivité thermique et une conductivité thermique respectivement supérieures à celles de la couche thermiquement isolante (21), l'absorptivité thermique et la conductivité thermique variant dans l'épaisseur de l'empilement composite multicouches (2) de façon infléchie.

4. Système (1) selon l'une quelconque des revendications précédentes, dans lequel au moins le dispositif de captation (10) comprend ledit empilement composite multicouches (2), et dans lequel l'empilement composite multicouches (2) présente une absorptivité thermique variant d'une valeur comprise entre 0,3 et 1 pour au moins une couche de l'empilement orientée vers une source de chaleur extérieure au système à une valeur inférieure à 0,3 pour au moins une couche de l'empilement orientée à l'opposé de la source de chaleur.

5. Système (1) selon l'une quelconque des revendications précédentes, dans lequel au moins le dispositif de transmission (11) comprend ledit empilement composite multicouches (2), et dans lequel l'empilement composite multicouches (2) présente, au moins sur une première portion (11a) s'étendant depuis le dispositif de captation (10), une absorptivité thermique variant d'une valeur comprise entre 0,3 et 1 pour au moins une couche de l'empilement orientée vers une source de chaleur extérieure au système à une valeur inférieure à 0,3 pour au moins une couche de l'empilement orientée à l'opposé de la source de chaleur.

6. Système (1) selon l'une quelconque des revendications précédentes, dans lequel au moins le dispositif de transmission (11) comprend ledit empilement composite multicouches (2), et dans lequel l'empilement composite multicouches (2) présente, au moins sur une deuxième portion (11b) s'étendant depuis le dispositif de restitution (12), une absorptivité thermique variant d'une valeur comprise entre 0,3 et 1 pour au moins une couche intermédiaire (22) de l'empilement à une valeur inférieure à 0,3 pour au moins une des couches de l'empilement situées de part et d'autre de la couche intermédiaire (22), ladite deuxième portion (11b) s'étendant sur une longueur de préférence inférieure à 10 m.

7. Système (1) selon l'une quelconque des revendications précédentes, dans lequel au moins le dispositif de captation (10) comprend ledit empilement composite multicouches (2), et dans lequel chaque couche conductrice thermique anisotrope (20) de l'empilement composite multicouches (2) du dispositif de captation (10) est agencée dans l'empilement de sorte à être orientée vers une source de chaleur extérieure au système, chaque couche thermiquement isolante (21) de l'empilement composite multicouches (2) du dispositif de captation (10) recouvrant la couche conductrice thermique anisotrope (20) sur un côté opposé à la source de chaleur.

8. Système (1) selon l'une quelconque des revendications précédentes, dans lequel chaque couche conductrice thermique anisotrope (10) de l'empilement composite multicouches (2) du dispositif de restitution (12) est configurée dans l'empilement pour être en conduction thermique avec un récupérateur de chaleur auquel l'énergie captée et transmise est à restituer, chaque couche thermiquement isolante (21) de l'empilement composite multicouches (2) du dispositif de restitution (12) recouvrant la couche conductrice thermique anisotrope (20) sur un côté opposé au récupérateur de chaleur.

**9.** Système (1) selon l'une quelconque des revendications précédentes, dans lequel au moins le dispositif de transmission (11) comprend ledit empilement composite multicouches (2), et dans lequel chaque couche conductrice thermique anisotrope (20) de l'empilement composite multicouches (2) est agencée dans l'empilement de sorte à être orientée vers une source de chaleur extérieure au système, chaque couche thermiquement isolante (21) de l'empilement composite multicouches (2) du dispositif de transmission (11) recouvrant la couche conductrice thermique anisotrope (20) sur un côté opposé à la source de chaleur.

**10.** Système selon l'une quelconque des revendications précédentes, dans lequel l'empilement composite multicouches du dispositif de transmission comprend des couches, dont au moins la couche conductrice thermique anisotrope et la couche thermiquement isolante, configurées entre elles pour générer au moins un gradient de conductivité thermique dans l'épaisseur de l'empilement.

**11.** Système (1) selon l'une quelconque des revendications précédentes, dans lequel au moins le dispositif de transmission (11) comprend ledit empilement composite multicouches (2), et dans lequel l'empilement composite multicouches (2) présente successivement, sur au moins une deuxième portion (11b) s'étendant depuis le dispositif de restitution (12), au moins une première couche thermiquement isolante (21), au moins une couche conductrice thermique anisotrope (20) et au moins une deuxième couche thermiquement isolante (21), ladite deuxième portion s'étendant sur une longueur de préférence inférieure à 10 m.

**12.** Système (1) selon l'une quelconque des revendications précédentes, dans lequel au moins le dispositif de captation (10) comprend ledit empilement composite multicouches (2), et dans lequel au moins un empilement composite multicouches (2) comprend en outre une sous-couche de lissage (41) que recouvrent au moins en partie la couche conductrice thermique anisotrope (20) et la couche thermiquement isolante (21) dudit empilement composite multicouches (2), la sous-couche de lissage (41) comprenant de préférence l'un au moins parmi : un asphalte et un polymère.

**13.** Système (1) selon l'une quelconque des revendications précédentes, dans lequel le dispositif de transmission (11) s'étend de sorte à être relié à une zone thermique additionnelle à laquelle un excès d'énergie captée par le dispositif de captation (10) peut être restitué ou depuis laquelle une énergie thermique peut être captée pour compenser un déficit d'énergie captée par le dispositif de captation (10).

**14.** Système (1) selon l'une quelconque des revendications précédentes, dans lequel la couche thermiquement isolante (21) comprend l'un au moins parmi : un asphalte et un matériau à base d'un mélange de gravillons et de liant hydraulique routier, tel que du bitume.

**15.** Système (1) selon l'une quelconque des revendications précédentes, dans lequel le dispositif de captation (10) est configuré pour constituer au moins en partie un soubassement du revêtement routier (3) et le dispositif de restitution (12) est agencé de façon déportée, par exemple d'une distance comprise entre 1 cm et 10 m, de préférence comprise entre 10 cm et 2 m, par rapport à un bord latéral (31) du revêtement routier (3).

FIG. 1

FIG. 2

FIG. 3

10, 11, 11a

3{
20
21

2

40, 41

FIG. 4

11, 11b

3{
21
20
21

2

40, 41

FIG. 5

12

3{
21
20

2

40, 41

FIG. 6

FIG. 7

**Europäisches Patentamt**
**European Patent Office**
**Office européen des brevets**

# RAPPORT DE RECHERCHE EUROPEENNE

Numéro de la demande

EP 19 16 9020

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 99/34155 A1 (WTH VLOERVERWARMING B V [NL]; RIJ HANS VAN [NL]) 8 juillet 1999 (1999-07-08) * page 6, ligne 22 - page 17, ligne 33; figure 1 * | 1-15 | INV. F24S20/64 |
| A | US 2010/154216 A1 (HULEN MICHAEL S [US]) 24 juin 2010 (2010-06-24) * alinéa [0039] - alinéa [0054]; figure 6 * | 1-15 | |
| A | US 2013/014916 A1 (WADLEY HAYDN N G [US] ET AL) 17 janvier 2013 (2013-01-17) * alinéas [0010], [0039], [0046] - [0052]; figure 2A * | 1-15 | |
| A | WO 2018/055314 A2 (EUROVIA [FR]) 29 mars 2018 (2018-03-29) * page 22, ligne 1 - ligne 19; figures 1-4 * | 1-15 | |
| A | WO 01/29320 A1 (HEWITT MARK GEOFFREY [GB]; FORD ANDREW JOHN [GB]) 26 avril 2001 (2001-04-26) * page 6, ligne 10 - page 15, ligne 21; figures 1-9c * | 1-15 | DOMAINES TECHNIQUES RECHERCHES (IPC)<br><br>F24S |
| A | DATABASE WPI Section PQ, Week 200941 Thomson Scientific, London, GB; Class Q74, AN 2009-K38229 XP002786707, -& KR 100 896 452 B1 (KIM Y J; SHINHWA GTI CO LTD) 14 mai 2009 (2009-05-14) * abrégé; figures 1-8 * | 1-15 | |

Le présent rapport a été établi pour toutes les revendications

| Lieu de la recherche | Date d'achèvement de la recherche | Examinateur |
|---|---|---|
| La Haye | 27 mai 2019 | Beltzung, Francis |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 16 9020

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-05-2019

| Document brevet cité au rapport de recherche | | Date de publication | Membre(s) de la famille de brevet(s) | | | Date de publication |
|---|---|---|---|---|---|---|
| WO 9934155 | A1 | 08-07-1999 | AU | 1788099 | A | 19-07-1999 |
| | | | DE | 69802568 | T2 | 01-08-2002 |
| | | | EP | 1049901 | A1 | 08-11-2000 |
| | | | NL | 1007903 | C2 | 30-06-1999 |
| | | | WO | 9934155 | A1 | 08-07-1999 |
| US 2010154216 | A1 | 24-06-2010 | US | 2010154216 | A1 | 24-06-2010 |
| | | | US | 2010154785 | A1 | 24-06-2010 |
| | | | US | 2011094500 | A1 | 28-04-2011 |
| | | | WO | 2010080549 | A1 | 15-07-2010 |
| | | | WO | 2010080550 | A1 | 15-07-2010 |
| | | | WO | 2010080552 | A1 | 15-07-2010 |
| US 2013014916 | A1 | 17-01-2013 | US | 2013014916 | A1 | 17-01-2013 |
| | | | US | 2019024985 | A1 | 24-01-2019 |
| | | | WO | 2011142841 | A2 | 17-11-2011 |
| WO 2018055314 | A2 | 29-03-2018 | CA | 3038365 | A1 | 29-03-2018 |
| | | | FR | 3056609 | A1 | 30-03-2018 |
| | | | WO | 2018055314 | A2 | 29-03-2018 |
| WO 0129320 | A1 | 26-04-2001 | AU | 7935000 | A | 30-04-2001 |
| | | | DE | 60032922 | T2 | 25-10-2007 |
| | | | DK | 1224357 | T3 | 21-05-2007 |
| | | | EP | 1224357 | A1 | 24-07-2002 |
| | | | ES | 2280251 | T3 | 16-09-2007 |
| | | | WO | 0129320 | A1 | 26-04-2001 |
| KR 100896452 | B1 | 14-05-2009 | AUCUN | | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 1884694 A
- CN 106948234 A
- CN 103633882 A
- CN 203960710 U